# EUROPEAN PATENT APPLICATION

(11) **EP 4 254 112 A1**
(43) Date of publication of application: **04.10.2023**
(21) Application number: 23163751.3
(22) Date of filing: 23.03.2023
(51) Int. Cl.: G05B 23/02, G06N 20/00

(54) **INFORMATION PROCESSING SYSTEM AND METHOD**

(30) Priority: 01.04.2022 JP 2022061490
(71) Applicant: OMRON Corporation, Kyoto 600-8530 (JP)
(72) Inventor: SASAKI, Tatsuya, Kyoto-shi, 600-8530 (JP)
(74) Representative: Mewburn Ellis LLP

(57) **Abstract**

An information processing system (1) includes: an obtaining module (230) configured to obtain time-series data from a control device (100); a decision module (232) configured to decide a plurality of different types of feature values (50) based on combination of a first function (30) that defines a range used for feature value calculation in a target piece of the time-series data and a second function (40) that defines a statistic used as feature value; and an assessment module configured to assess the time-series data for each of the plurality of different types of feature values.

## Description

### BACKGROUND OF THE INVENTION

### Field of the Invention

The present invention relates to an information processing system, an information processing method, and an information processing apparatus.

### Description of the Background Art

In various production sites, there is a great need for predictive maintenance of equipment and machinery for better production ratios. The predictive maintenance refers to a form of maintenance that seeks to detect some kind of trouble or possible malfunction in equipment and/or machinery for early maintenance before any addressed trouble becomes really serious, possibly demanding shutdown of the whole facility. An algorithm(s) tailored for a target object may be required of such trouble or malfunction detection.

For example, Japanese Patent Laying-Open No. 2019-045942 describes a fault diagnostic system in which a difference(s) between pieces of measured data before and after maintenance is used as a diagnostic feature value that indicates a sign of malfunction in order to flexibly respond to different targets to be diagnosed.

### SUMMARY OF THE INVENTION

Selecting a feature value(s) is a critical factor in generating algorithms tailored for detection targets. However, variously different feature values are, in fact, calculable from time-series data, making it difficult to decide which one of different types of feature values should be selected and used.

To address these issues of the known art, the present invention is directed to providing a technology that can assist selection of a more suitable feature value(s) from a plurality of different types of feature values which are decided by variously combining statistics and ranges used for feature value calculation.

An information processing system according to an example of the present invention includes: an obtaining module configured to obtain time-series data from a control device; a decision module configured to decide a plurality of different types of feature values based on combination of a first function that defines a range used for feature value calculation in a target piece of the time-series data and a second function that defines a statistic used as feature value; and an assessment module configured to assess the time-series data for each of the plurality of different types of feature values.

In the system thus configured, the time-series data may be assessed for each of the plurality of different types of feature values which are decided based on combination of the first function that defines a range used for feature value calculation in the target time-series data and the second function that defines a statistic used as feature value. Thus, information of more appropriate feature values may be successfully obtained.

The assessment module may be configured to calculate an accuracy of separation for each of the plurality of different types of feature values based on a label appended to the time-series data and a value of a corresponding type of the feature values calculated from the time-series data. In the system thus configured, a more appropriate one of the plurality of different types of feature values may be decided based on the accuracy of separation.

The information processing system may further include a first presentation module configured to present a first user interface screen including the accuracy of separation calculated by the assessment module for at least part of the plurality of different types of feature values. In the system thus configured, a user may easily decide a more appropriate feature value by simply checking the first user interface screen.

The information processing system may further include an algorithm generation module configured to generate a malfunction detection algorithm including one or more feature values selected from the plurality of different types of feature values. In the system thus configured, the malfunction detection algorithm may be generated based on one or more feature values selected as more appropriate ones than the rest.

The algorithm generation module may be configured to transmit the malfunction detection algorithm to a control device. In the system thus configured, the control device may be allowed to carry out the malfunction detection in accordance with the malfunction detection algorithm using one or more feature values selected as more appropriate ones than the rest.

The assessment module may be configured to decide a piece of the time-series data assumed to exhibit a property that differs from other pieces of the time-series data for each of the plurality of different types of feature values based on a distribution of a target one of the plurality of different types of feature values calculated from the time-series data. In the system thus configured, any piece of the time-series data that should be labeled as malfunctioning may be easily found among unlabeled pieces of the time-series data.

The information processing system may further include a second presentation module configured to present a second user interface screen including the piece of the time-series data assumed to exhibit a property that differs from other pieces of the time-series data calculated by the assessment module for at least part of the plurality of different types of feature values. In the system thus configured, a user who consults the second user interface screen may easily find, among unlabeled pieces of the time-series data, any piece of the time-series data that should be labeled as malfunctioning.

The information processing system may further include a training data generation module configured to generate training data by appending a label to the time-series data in response to a user operation. In the system thus configured, a user may automatically generate training data by simply labeling the time-series data.

An information processing method according to another example of the present invention is implemented by a computer. The method includes: obtaining time-series data from a control device; deciding a plurality of different types of feature values based on combination of a first function that defines a range used for feature value calculation in a target piece of the time-series data and a second function that defines a statistic used as feature value; and assessing the time-series data for each of the plurality of different types of feature values.

An information processing apparatus according to yet another example of the present invention includes: an obtaining module configured to obtain time-series data from a control device; a decision module configured to decide a plurality of different types of feature values based on combination of a first function that defines a range used for feature value calculation in a target piece of the time-series data and a second function that defines a statistic used as feature value; and a transmission module configured to request a computing resource to perform assessment of the time-series data for each of the plurality of different types of feature values.

The foregoing and other objects, features, aspects and advantages of the invention will become more apparent from the following detailed description of the present invention when taken in conjunction with the accompanying drawings.

### BRIEF DESCRIPTION OF THE DRAWINGS

Fig. 1 is a diagram that schematically illustrates an information processing system according to an embodiment.
Fig. 2 is a block diagram that schematically illustrates an exemplified functional configuration of the information processing system according to the embodiment.
Fig. 3 is a block diagram that illustrates an exemplified hardware configuration of a control device in the information processing system according to the embodiment.
Fig. 4 is a block diagram that illustrates an exemplified hardware configuration of an information processing apparatus in the information processing system according to the embodiment.
Fig. 5 is a block diagram that illustrates an exemplified hardware configuration of a server device in the information processing system according to the embodiment.
Fig. 6 is a diagram that illustrates an exemplified malfunction detection in the information processing system according to the embodiment.
Fig. 7 is a diagram that illustrates an exemplified feature value group usable in the information processing system according to the embodiment.
Figs 8A and 8B are diagrams that illustrate an accuracy of separation in the information processing system according to the embodiment.
Fig. 9 is a diagram that illustrates an exemplified feature value optimizing process in the information processing system according to the embodiment.
Fig. 10 is a flow chart that illustrates processing steps of the feature value optimizing process in the information processing system according to the embodiment.
Fig. 11 is a schematic drawing that illustrates an exemplified user interface screen provided by the information processing apparatus of the information processing system according to the embodiment.
Fig. 12 is a diagram that illustrates an exemplified training data generating process in the information processing system according to the embodiment.
Figs. 13A and 13B are diagrams that illustrate a malfunction data searching process in the information processing system according to the embodiment.
Fig. 14 is a flow chart that illustrates processing steps of the training data generating process in the information processing system according to the embodiment.
Fig. 15 is a schematic drawing that illustrates another example of the user interface screen provided by the information processing apparatus of the information processing system according to the embodiment.

### DESCRIPTION OF THE PREFERRED EMBODIMENTS

An embodiment of the invention is hereinafter described referring to the accompanying drawings. The same or similar components and units in the drawings are simply illustrated with the same reference signs, redundant description of which will basically be omitted.

### <A. Example of application>

First, an exemplified situation is given and described below to which the invention is applicable.

The "malfunctioning detection" described in this specification encompasses, in its scope, processes to detect a device or system condition(s) that differs from regular conditions, thus including detection of flaws or troubles in a relative sense, in addition to detection of unquestionably abnormal events that should be immediately addressed.

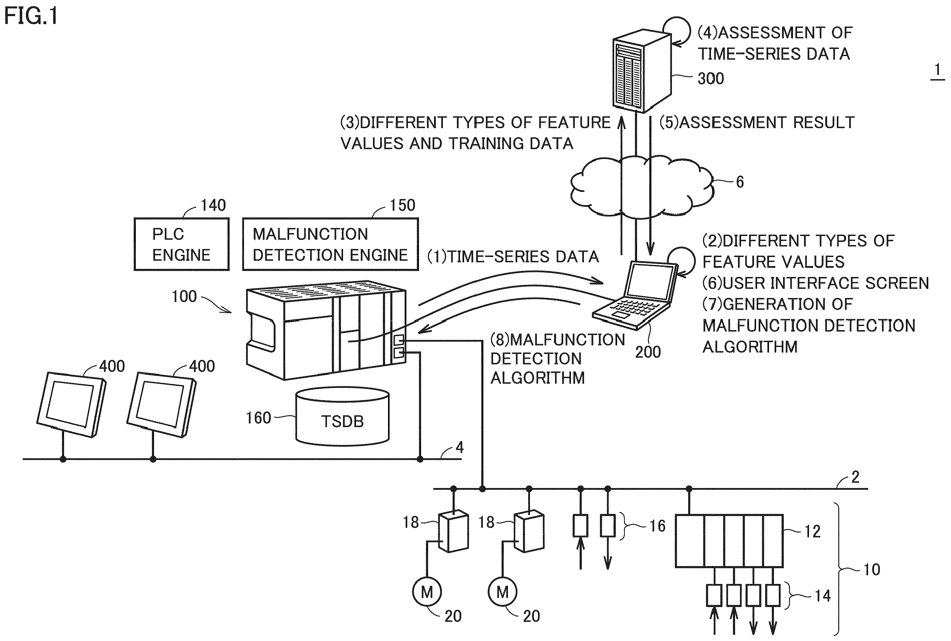

Fig. 1 is a diagram that schematically illustrates an information processing system 1 according to an embodiment. With reference to Fig. 1, information processing system 1 according to the embodiment includes, as its principal components, a control device 100, an information processing apparatus 200; an example of computers connectable to control device 100, and a server device 300.

Control device 100 may be a computer, for example, PLC (programmable logic controller). Control device 100 is connected to a field device group 10 through a field bus 2. Field bus 2 may preferably be compliant with a communication protocol for industrial use. Known examples of the communication protocol may include EtherCAT (registered trademark), EtherNet/IP (registered trademark), DeviceNet (registered trademark), and CompoNet (registered trademark).

Field device group 10 includes a device that collects input data from a production site (may be hereinafter referred to as "field") and a device that produces a certain action(s) and/or effect(s) on the field based on commands (output data) generated by control device 100.

In the system configured as illustrated in Fig. 1, field device group 10 includes a remote I/O (Input/Output) device 12, a relay group 14, a servo driver 18, and a servo motor 20.

As described earlier, input data and output data are transmitted and received to and from control device 100 and field device group 10 through field bus 2. The data thus communicated is updated in a very short cycle at orders of magnitude from a few hundreds of µsec to several tens of msec.

Control device 100 includes a PLC engine 140 used to execute computations for control of equipment and machinery in the production site, and a malfunction detection engine 150 used to detect an optional malfunction(s). Malfunction detection engine 150 may, for example, calculate a feature value(s) from input data collected from the field in accordance with a predefined malfunction detection algorithm and determines whether any malfunction is occurring based on the calculated feature value(s).

Control device 100 has a time-series database 160 (hereinafter, may be abbreviated to "TSDB") in which various pieces of data are storable. For example, input data from field device group 10, output data to field device group 10, and internal data controlled and supervised in control device 100 are stored in this database in a sequential order. The data stored in TSDB 160 may be hereinafter referred to as "time-series data".

Control device 100 may be connected to one or more HMIs (Human Machine Interfaces) 400 through a field bus 4.

Information processing apparatus 200 offers, for example, the following features; development environment setting for a user program executed by control device 100 (for example, program generation/editing tool, parser, compiler), parameter setting for control device 100 and devices connected to control device 100 (configurations), transmission of the generated user program to control device 100, and online correction and alteration of the user program executed by control device 100.

Further, information processing apparatus 200 decides, for example, a feature value(s) used to operate malfunction detection engine 150 of control device 100 according to processing steps described later. Information processing apparatus 200 may be connected to server device 300 through a high-end network 6.

Server device 300 may be typically a cloud-based computing resource. Server device 300 executes an optional computing process(es) as requested by information processing apparatus 200.

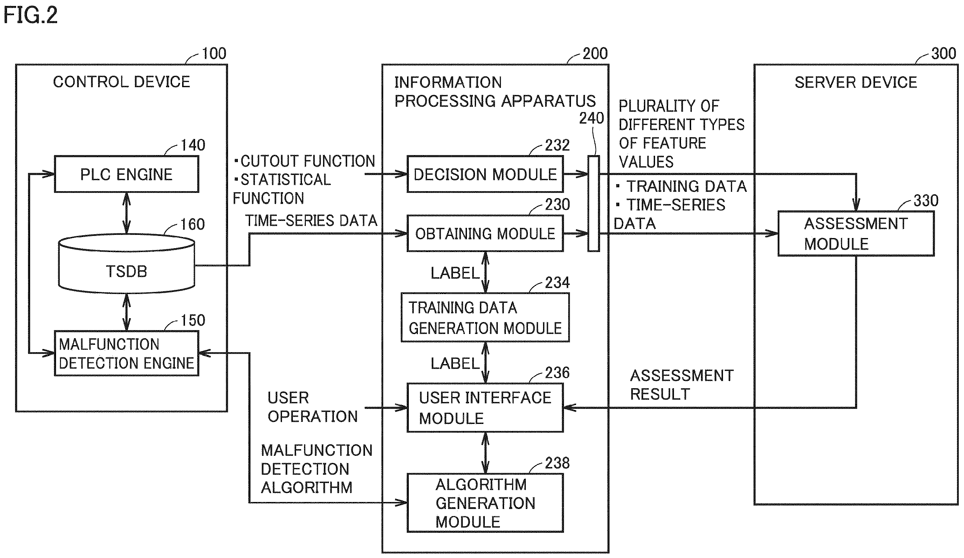

Fig. 2 is a block diagram that schematically illustrates an exemplified functional configuration of information processing system 1 according to the embodiment. With reference to Fig. 2, control device 100 includes, as its functional features, PLC engine 140, malfunction detection engine 150, and TSDB 160. Information processing apparatus 200 includes, as its functional features, an obtaining module 230, a decision module 232, a training data generation module 234, a user interface module 236, an algorithm generation module 238, and a transmission module 240.

Obtaining module 230 obtains time-series data from TSDB 160 of control device 100. An optional protocol may be employed to obtain the time-series data.

Decision module 232 decides a plurality of different types of feature values based on combination of a cutout function (first function) that defines a range used for feature value calculation in a target piece of time-series data and a statistical function (second function) that defines a statistic used as feature value.

Learning data generation module 234 appends a label to each piece of time-series data in response to a user operation to generate training data.

User interface module 236 presents, for at least part of the plurality of different types of feature values, a user interface screen including an accuracy of separation calculated by an assessment module 330 and/or a user interface screen including a piece(s) of time-series data assumed to exhibit a property that differs from other pieces of time-series data calculated by assessment module 330. Specific examples of the user interface screens thus presented will be described later. In response to a user operation, user interface module 236 feeds the other modules with instructions as requested by the user.

Algorithm generation module 238 generates a malfunction detection algorithm including one or more feature values selected from the plurality of different types of feature values.

Transmission module 240 transmits, to server device 300, the plurality of different types of feature values decided by decision module 232 and training data (labeled time-series data group) or time-series data.

Server device 300 includes, as its functional feature, assessment module 330. Assessment module 330 performs assessment of the time-series data for each of the plurality of different types of feature values. Specific examples of the time-series data will be described later.

Typical processing steps carried out in information processing system 1 are hereinafter described with reference to Fig. 1 again. Information processing apparatus 200 (obtaining module 230) obtains the time-series data ((1) time-series data) from control device 100 (TSDB 160). Information processing apparatus 200 (decision module 232) decides the different types of feature values ((2) plurality of different types of feature values) based on combination of the cutout function (first function) and the statistical function (second function).

Then, information processing apparatus 200 transmits the different types of feature values and training data (or time-series data) to server device 300 ((3) plurality of different types of feature values and training data).

Server device 300 (assessment module 330) performs assessment of the time-series data for each of the plurality of different types of feature values ((4) assessment of time-series data). Then, server device 300 transmits the obtained assessment result to information processing apparatus 200 ((5) assessment result).

Information processing apparatus 200 (user interface module 236) presents a user interface screen based on the assessment result received from server device 300 ((6) user interface screen). Information processing apparatus 200 (algorithm generation module 238) further generates a malfunction detection algorithm ((7) generation of malfunction detection algorithm). The malfunction detection algorithm generated then is transmitted to control device 100 ((8) malfunction detection algorithm).

Control device 100 configures malfunction detection engine 150 in accordance with the malfunction detection algorithm received from information processing apparatus 200.

In information processing system 1 according to the embodiment, the time-series data is assessed in view of the variously different types of feature values which are decided based on combination of the cutout function (first function) that defines a range used for feature value calculation in a target piece of time-series data and the statistical function (second function) that defines a statistic (or the type of statistics) used as feature value. Thus, a more appropriate feature value(s) may be successfully decided. A more appropriate feature value(s) may allow the malfunction detection algorithm to improve in accuracy.

### <B. Hardware Configuration>

Next, a description is given below to the hardware configuration of a principal device in information processing system 1 according to the embodiment.

### (b1: Control device 100)

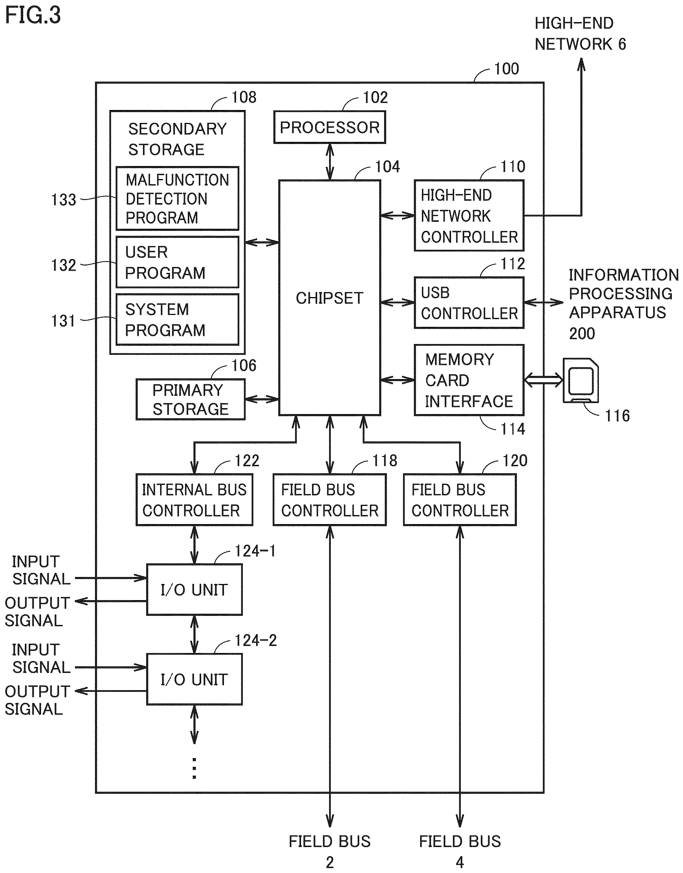

Fig. 3 is a block diagram that illustrates an exemplified hardware configuration of control device 100 in information processing system 1 according to the embodiment. With reference to Fig. 3, control device 100 may include a processor 102, for example, CPU (Central Processing Unit) or MPU (Micro-Processing Unit), a chipset 104, a primary storage 106, a secondary storage 108, a high-end network controller 110, a USB (Universal Serial Bus) controller 112, a memory card interface 114, an internal bus controller 122, field bus controllers 118 and 120, and I/O units 124-1, 124-2,..., and other I/O units numbered likewise.

Processor 102 reads programs stored in secondary storage 108 and then loads and runs the read programs in primary storage 106 to execute processes required of control device 100. Chipset 104 controls data transmission between processor 102 and the other units and components.

In secondary storage 108 are stored a system program 131 for implementation of the PLC engine, a user program 132 to be run with the PLC engine, and a malfunction detection program 133 for implementation of malfunction detection engine 150. The region of secondary storage 108 may be, in part, used as TSDB 160.

High-end network controller 110 controls the data communication through a high-end network 6 to and from the other apparatuses. USB controller 112 controls the data communication to and from information processing apparatus 200 through USB connection.

Memory card interface 114 is detachably mountable with a memory card 116, so that various pieces of data can be written in and read from memory card 116 (for example, user program, trace data).

Internal bus controller 122 is an interface for data communication to and from I/O units 124-1, 124-2,..., mounted to control device 100.

Field bus controller 118 controls data communication to and from the other devices through field bus 2. Field bus controller 120 controls data communication to and from the other devices through field bus 4.

Fig. 3 shows an example in which processor 102 runs the program to enable the functional features required. Instead, the functional features, in part or in whole, may be implemented using a dedicated hardware circuit (for example, ASIC (Application Specific Integrated Circuit) or FPGA (Field-Programmable Gate Array). The principal unit of control device 100 may be actualized using a hardware device configured in compliance with a general-purpose architecture (for example, industrial personal computer derived from general-purpose computer). In this instance, the virtualization technology may be employed, in which two or more operating systems (OS) for different uses may be operated in parallel, and necessary applications may be executed on the OSs.

### (b2: Information processing apparatus 200)

Information processing apparatus 200 according to the embodiment may be actualized through a program run by a hardware device that complies with a general-purpose architecture (for example, general-purpose architecture).

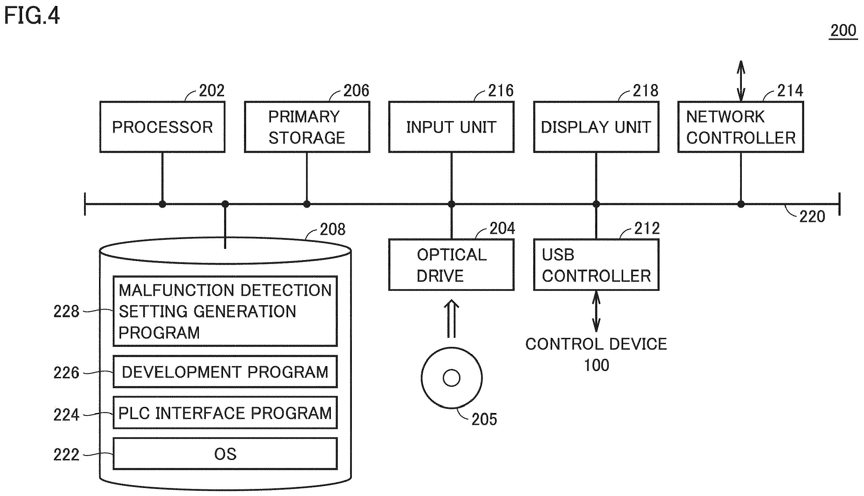

Fig. 4 is a block diagram that illustrates an exemplified hardware configuration of information processing apparatus 200 in information processing system 1 according to the embodiment. With reference to Fig. 4, information processing apparatus 200 includes a processor 202, for example, CPU or MPU, an optical drive 204, a primary storage 206, a secondary storage 208, a USB controller 212, a network controller 214, an input unit 216, and a display unit 218. These structural elements are interconnected through a bus 220.

Processor 202 reads programs stored in secondary storage 208 and then loads and runs the read programs in primary storage 206 to execute processes described later.

Secondary storage 208 may include, for example, HDD (Hard Disk Drive) and/or SSD (Flash Solid State Drive). The following OS and programs may be typically stored in secondary storage 208; OS 222, PLC interface program 224 for communication of malfunction detection-related data with control device 100, development program 226 for generation of a user program to be run in information processing apparatus 200, debugging of the generated user program, and settings of system architecture definitions and parameters, and a malfunction detection setting generation program 228 for settings required of malfunction detection engine 150. Any other required programs but those illustrated in Fig. 4 may be stored in secondary storage 208.

Information processing apparatus 200 is equipped with optical drive 204. Computer-readable programs are non-transitorily stored in and read from a recording medium 205 (for example, optical recording medium such as DVD (Digital Versatile Disc)). The read programs are then installed into, for example, secondary storage 208.

The programs run by information processing apparatus 200 may be installed through computer-readable recording medium 205. Instead, the programs may be downloaded from a server device on the network and then installed into the storage. The functional features of information processing apparatus 200 according to the embodiment may be enables by using some of the modules provided by OS 222.

USB controller 212 controls the data communication with control device 100 through USB connection. Network controller 214 controls the data communication to and from the other apparatuses through an optional network.

Input unit 216 includes a keyboard and a mouse to receive inputs from a user. Display unit 218 includes a display, indicators and a printer to output, for example, processing results of processor 202.

In Fig. 4 is illustrated a structural example in which processor 202 runs the program to enable the functional features required. Instead, the functional features may be implemented, in part or in whole, using a dedicated hardware circuit (for example, ASIC or FPGA).

### (b3: Server device 300)

Server device 300 according to the embodiment may be typically a cloud-based computing resource.

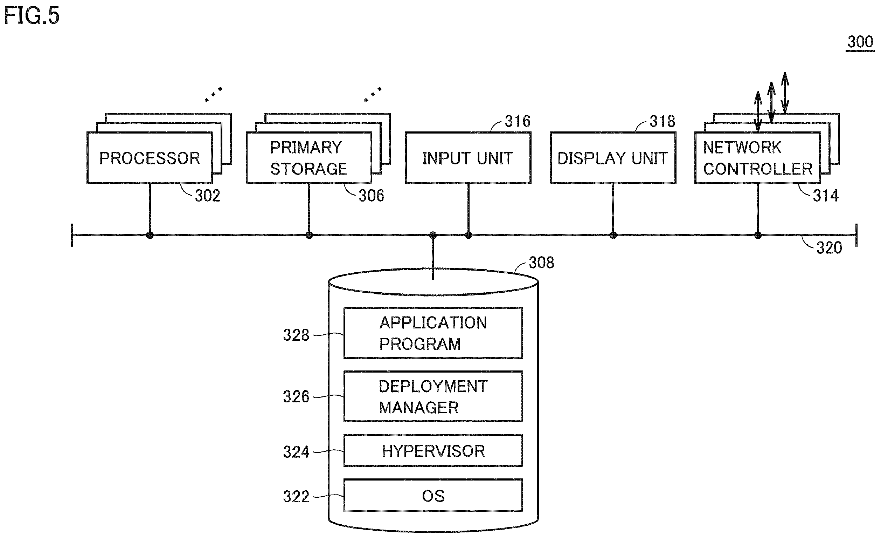

Fig. 5 is a block diagram that illustrates an exemplified hardware configuration of server device 300 in information processing system 1 according to the embodiment. With reference to Fig. 5, server device 300 includes one or more processors 302, for example, CPU or GPU (Graphics Processing Unit), one or more primary storages 306, a secondary storage 308, one or more network controllers 314, an input unit 316, and a display unit 318. These structural elements are interconnected through a bus 320.

The following OS and elements may be typically stored in secondary storage 308; OS 322, a hypervisor 324 used for control of a plurality of virtual computers, and a deployment manager 326 for deployment of application programs 328 to be run by the virtual computers. Any other programs required but the programs illustrated in Fig. 5, if necessary, may be stored in secondary storage 308.

In Fig. 5 is illustrated a structural example in which processor 302 is used. Instead, the functional features may be implemented, in part or in whole, using a dedicated hardware circuit (for example, ASIC or FPGA).

### <C. Malfunction detection>

Next, malfunction detection in information processing system 1 according to the embodiment is hereinafter described.

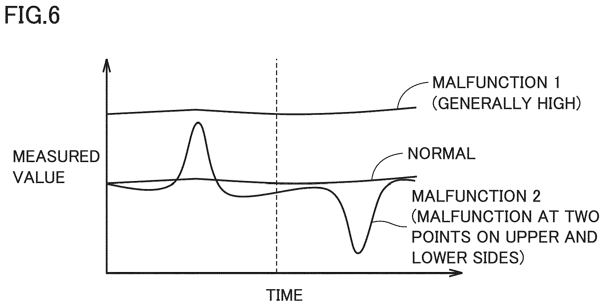

Fig. 6 is a diagram that illustrates an exemplified malfunction detection in information processing system 1 according to the embodiment. In Fig. 6 are illustrated examples of time-series data of measured values for malfunction detection (normal data) and of time-series data of measured values indicating two different malfunctions.

The time-series data of measured values for malfunction 1 generally shows greater values than the normal time-series data. Therefore, malfunction 1 may be detectable by using, as feature value, an average value for the whole range.

The time-series data of measured values for malfunction 2, on the other hand, shows large deviations at two points from the abnormal time-series data (malfunction suspected on upper and lower sides of the graph). Such time-series data, if averaged likewise for the whole range, may result in a value similar to the average of normal time-series data. In this instance, the average value for the whole range may be useless, failing to distinguish malfunction 2 from the normal condition.

Malfunction 2, therefore, may be detectable by using two average values respectively calculated for the first half and for the latter half of the whole range.

The feature value for malfunction detection may be selected from various feature values depending on combination of 1) a target range to be focused, and 2) a statistic to be used. Thus, an appropriate feature value(s) should be searched and decided depending on the condition and characteristic of any malfunction to be detected (may be referred to as feature value engineering).

The feature value search, which often depends on personal experiences and skills, may be a difficult task, often failing to decide an appropriate or suitable feature value(s). To this end, a mechanism is desirably provided that can facilitate the feature value search for malfunction detection.

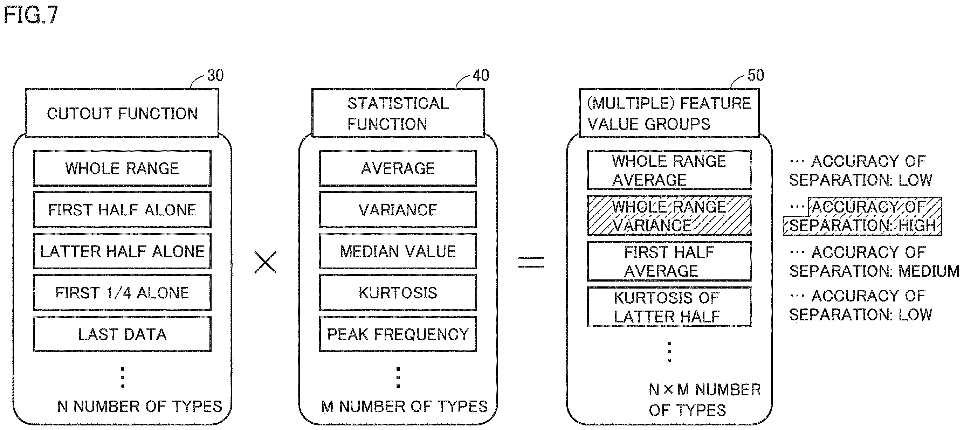

Fig. 7 is a diagram that illustrates an exemplified feature value group usable in information processing system 1 according to the embodiment. With reference to Fig. 7, while the feature values are calculable from the time-series data, different types of these feature values may be defined on combination of cutout function 30 and statistical function 40.

Cutout function 30 is a function that defines a range used for the feature value calculation in a target piece of time-series data. Cutout function 30 may be referred to as a preprocessing function or filtering function. For example, cutout function 30 may include "whole range" for the whole range of the target time-series data, "first half alone" for the first half of the target time-series data, "latter half alone" for the latter half of the target time-series data, "first 1/4 alone" for the 1/4 first half of the target time-series data, and "last data" for the last portion of the target time-series data.

Statistical function 40 is a function that defines a statistic used as feature value. For example, statistical function 40 may include "average"; an average value in the target range, "variance"; variance in the target range, "median value"; a median value in the target range, "kurtosis"; a kurtosis in the target range, and "peak frequency; a principal component's frequency obtained by frequency analysis of the time-series data in the target range.

A feature value group 50 including a plurality of feature values (N×M number of different types of feature values) may be defined by variously combining (N number of types of) cutout function 30 with (M number of types of) statistical function 40. One or more feature values suitable for intended malfunction detection may be decided by assessing the accuracy of separation for each one in feature value group 50.

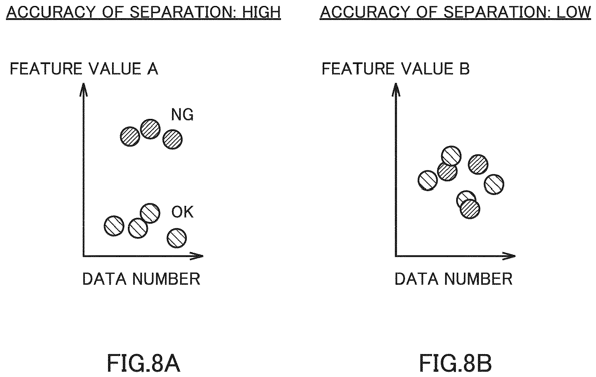

Figs 8A and 8B are drawings that illustrate the accuracy of separation in information processing system 1 according to the embodiment. In Figs. 8A and 8B are illustrated exemplified feature values calculated from samples (time-series data) labeled with Normal (OK) and Not Normal (NG: No Good).

In the example illustrated in Fig. 8A, an OK-labeled sample set and an NG-labeled sample set are separated from each other. Thus, the feature values differently labeled are clearly separable in the feature value space, which may be determined as a high accuracy of separation.

In the example illustrated in Fig. 8B, an OK-labeled sample set and an NG-labeled sample set are inseparably present in the feature value space. Thus, the feature values differently labeled are not separable in the feature value space, which may be determined as a low accuracy of separation.

Information processing system 1 according to the embodiment may successfully search an appropriate feature value(s) through assessment of the accuracy of separation of feature values depending on the training data. For calculation of the accuracy of separation may be used, for example, AUC (Area Under the Curve), discriminant d' (average distance between distributions), within-class variance, or between-class variance.

### <D. Feature value optimization>

A feature value optimizing process using the training data is hereinafter described.

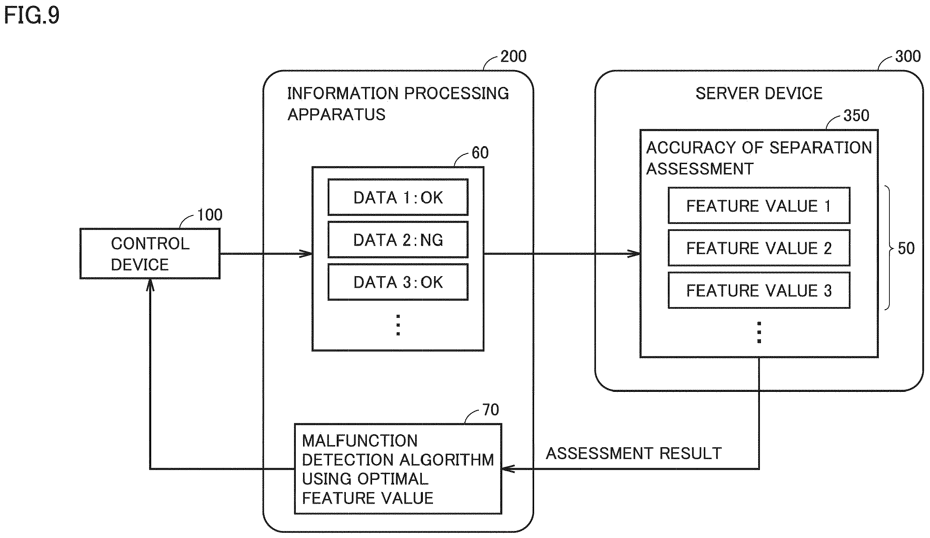

Fig. 9 is a diagram that illustrates an exemplified feature value optimizing process in information processing system 1 according to the embodiment. With reference to Fig. 9, information processing apparatus 200 obtains a time-series data group stored in TSDB 160 of control device 100. A label (for example, OK label or NG label) is appended, using an optional means, to each piece of data in the time-series data group. The labeled time-series data group is used as training data 60.

A user may check each piece of time-series data and manually append a label to the data. Typically, a piece(s) of time-series data desirably detected as malfunction may be known beforehand.

Control device 100 transmits training data 60 to server device 300. Control device 100 also transmits, to server device 300, information of feature value group 50 defined based on combination of cutout function 30 and statistical function 40.

Server device 300 has an accuracy of separation assessment algorism 350; an example of assessment module 330, to calculate the accuracy of separation for each one in feature value group 50 (feature value 1, feature value 2,...).

To be more specific, server device 300 selects one of the different types of feature values included in feature value group 50 and calculates the feature value of the selected type for each piece of data in the time-series data group included in training data 60. Then, server device 300 calculates the accuracy of separation based on the per-label distribution of the feature value calculated from the time-series data group.

Server device 300 repeatedly carries out the process described thus far for all of the different types of feature values included in feature value group 50.

As a reply to information processing apparatus 200, server device 300 sends an optimal feature value based on the accuracies of separation calculated for all of the different types of feature values included in feature value group 50. Information processing apparatus 200 presents, to a user, the result of calculation received from server device 300 and generates a malfunction detection algorithm 70 using the selected one or more different types of feature values in response to a user operation. Thus, information processing apparatus 200 generates malfunction detection algorithm 70 including one or more feature values selected from the different types of feature values. Lastly, information processing apparatus 200 transmits the generated malfunction detection algorithm 70 to control device 100.

In information processing system 1, the accuracy of separation is calculated for all of the different types of feature values included in feature value group 50 which are defined based on combination of cutout function 30 and statistical function 40. Thus, information processing system 1 may successfully decide a feature value(s) suitable for the condition and characteristic of malfunction to be detected.

Feature value group 50 including a plurality of different types of feature values may possibly involve an enormous volume of computations. To deal with such a heavy computational load, server device 300 (for example, cloud-based computing resource) may preferably be additionally used, instead of use of information processing apparatus 200 alone. Information processing apparatus 200, if equipped with an abundant computing resource, may be solely used to handle all of the computations.

Cutout function 30 and statistical function 40 may be prepared in the form of software elements (for example, user-defined functions). Thus, the feature values used in malfunction detection algorithm 70 may be described in a high-level language. The information of feature value group 50 transmitted to server device 300 may be defined using the prepared software elements.

Malfunction detection algorithm 70 may require a threshold(s) to determine whether malfunction is occurring. Information processing apparatus 200 may calculate the threshold(s) by inputting training data 60 to malfunction detection algorithm 70 which uses the decided one or more feature values. In this instance, malfunction detection algorithm 70 and the calculated threshold(s) are transmitted to control device 100.

Malfunction detection algorithm 70 may further contain log information such as the number of uses. Thus, malfunctions may be detectable depending on their behaviors.

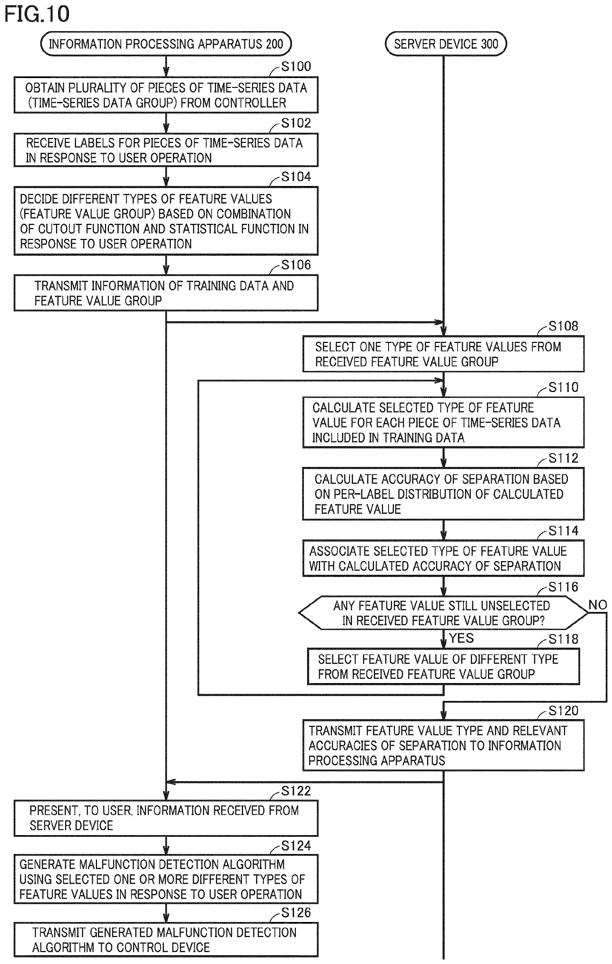

Fig. 10 is a flow chart that illustrates processing steps of the feature value optimizing process in information processing system 1 according to the embodiment. With reference to Fig. 10, information processing apparatus 200 obtains a plurality of pieces of time-series data (time-series data group) from control device 100 (step S100). Thus, information processing apparatus 200 carries out a process to obtain time-series data from control device 100.

Information processing apparatus 200 receives labels to be appended to the pieces of time-series data in response to a user operation (step S102). Learning data 60 is then generated that includes the labeled pieces of time-series data group.

Information processing apparatus 200, in response to a user operation, decides a plurality of different types of feature values (feature value group 50) based on combination of cutout function 30 and statistical function 40 (step S104). Thus, information processing apparatus 200 carries out a process to decide a plurality of different types of feature values based on combination of cutout function 30 (first function) that defines a range used for feature value calculation in a target piece of time-series data and statistical function 40 (second function) that defines a statistic used as feature value.

Then, information processing apparatus 200 transmits information of feature value group 50 and training data 60 to server device 300 (step S106). Specifically, information processing apparatus 200 requests the computing resource (typically, server device 300) to perform assessment of the time-series data for each of the plurality of different types of feature values. Server device 300; an exemplified computing resource, carries out a process to assess the time-series data for each of the plurality of different types of feature values.

To be more specific, server device 300 selects one of the different types of feature values included in feature value group 50 received from information processing apparatus 200 (step S 108) and calculates the feature value of the selected type for each piece of time-series data included in training data 60 (step S110). Server device 300 calculates the accuracy of separation based on the per-label distribution of the calculated feature value (step S 112) and associates the calculated accuracy of separation with the feature value of the selected type (step S 114). The calculated accuracy of separation may be a value quantified as separation score, which will be described later.

Next, server device 300 determines whether any feature value remains unselected in the received feature value group 50 (step S1 16). In case any feature value in the received feature value group 50 is still unselected (YES in step S116), server device 300 selects the feature value of a different type in feature value group 50 received from information processing apparatus 200 (step S118) and repeats step S110 and steps that follow this step.

Thus, server device 300 calculates the accuracy of separation for each of the plurality of different types of feature values based on a label appended to the time-series data and the value of a target one of the feature values calculated from the time-series data.

In case no feature value is left unselected in the received feature value group 50 (NO in step S1 16), server device 300 transmits the feature value types and the relevant accuracies of separation to information processing apparatus 200 (step S120).

Information processing apparatus 200 presents, to a user, the information received from server device 300 (step S122). In response to a user operation, information processing apparatus 200 generates malfunction detection algorithm 70 using the selected one or more different types of feature values (step S124). Lastly, information processing apparatus 200 transmits the generated malfunction detection algorithm 70 to control device 100 (step S126).

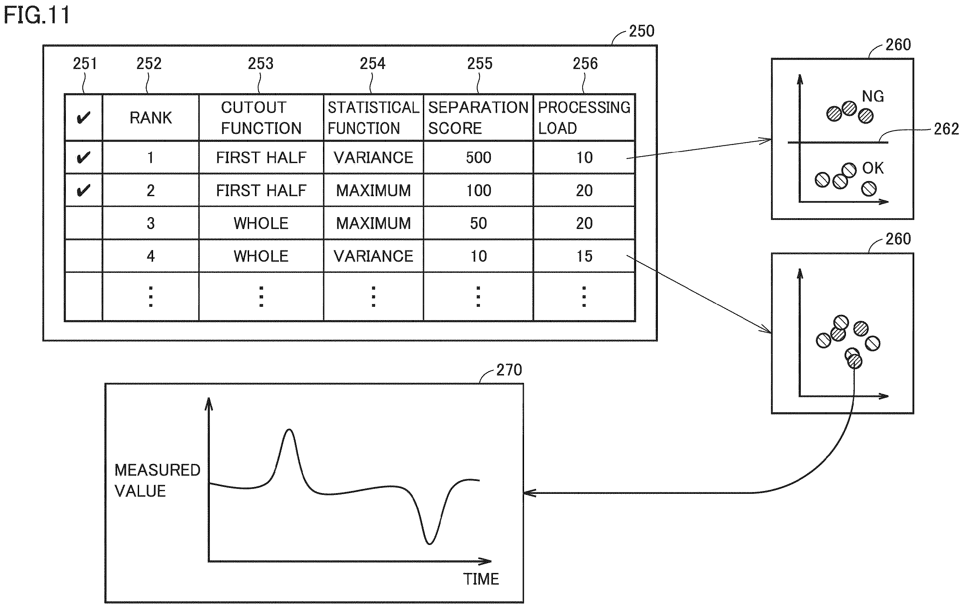

Fig. 11 is a schematic drawing that illustrates an exemplified user interface screen provided by information processing apparatus 200 of information processing system 1 according to the embodiment. With reference to Fig. 11, information processing apparatus 200 provides a user interface screen 250 including the calculation result.

Information processing apparatus 200 provides user interface screen 250 including the accuracy of separation (separation score) calculated by server device 300 (assessment module 330) for at least part of the plurality of different types of feature values.

To be specific, user interface screen 250 includes a ranking result obtained as per the calculated accuracies of separation. To be more specific, user interface screen 250 includes an accuracy of separation calculation result for each of the different types of feature values. A user selects, on user interface screen 250, the type of a feature value for use in malfunction detection algorithm 70.

User interface screen 250 includes a checking column 251, a ranking column 252, a cutout function column 253, a statistical function column 254, a separation score column 255, and a processing load column 256.

Checking column 251 receives selection by a user of the type of a feature value for use in malfunction detection algorithm 70. Ranking column 252 shows a per-type ranking order of the different types of feature values based on the accuracies of separation (separation scores).

Cutout function column 253 shows the type of a selected cutout function. Statistical function column 254 shows the type of a selected statistical function.

Separation score column 255 shows separation scores each obtained by quantifying the accuracy of separation calculated for a corresponding one of the different types of feature values. Processing load column 256 shows values each obtained by quantifying a processing load associated with calculation of a corresponding one of the different types of feature values.

Optionally, a feature value distribution graph 260 used for separation accuracy calculation may be displayed in response to selection of one of the different types of feature values on user interface screen 250. A threshold 262 decided during the process to calculate the accuracy of separation may be displayed on feature value distribution graph 260.

A user is allowed to check the calculated accuracy of separation on feature value distribution graph 260 and may suitably change threshold 262 decided earlier.

When one of the feature values is selected on feature value distribution graph 260, a time-series data graph 270 may be displayed that indicates the time-series data for which the selected feature value has been calculated. For example, a user may select an outlier included in feature value distribution graph 260 to check the time-series data associated with this outlier.

When training data 60 (labeled time-series data group) is prepared and available, a suitable feature value may be decided by using the variously different types of feature values for assessment.

### <E. Learning data>

Learning data 60 (labeled time-series data group) needs to be prepared beforehand in the feature value optimizing process. The process to generate training data 60 is hereinafter described.

Most of pieces of data in the time-series data group collected by control device 100 may be typically Normal (OK) data instead of Not Normal (NG) data. Therefore, malfunction data included in the time-series data group may be more easily and efficiently extracted by using different types of feature values for assessment.

In this specification, "malfunction data" refers to a piece(s) of time-series data exhibiting a property that differs from other pieces of time-series data. The extraction of malfunction data, therefore, includes a process to decide a piece(s) of time-series data assumed to exhibit a property that differs from other pieces of time-series data.

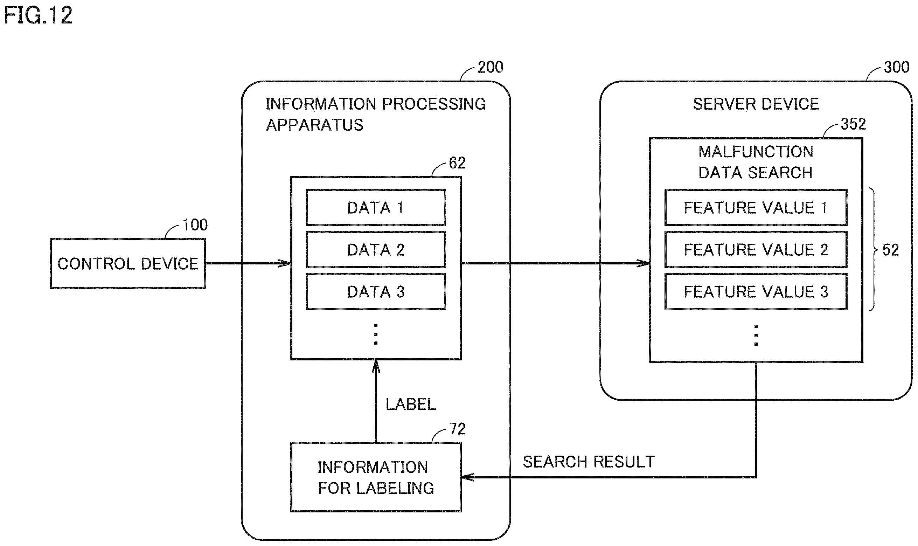

Fig. 12 is a diagram that illustrates an exemplified training data generating process in information processing system 1 according to the embodiment. With reference to Fig. 12, information processing apparatus 200 obtains a time-series data group 62 stored in TSDB 160 of control device 100. Pieces of data in time-series data group 62 are not labeled.

In case time-series data group 62 contains too many pieces of time-series data, a user may practically fail to check all of them, possibly overlooking some malfunction data.

Control device 100 transmits, to server device 300, time-series data group 62 and information of feature value group 50 defined based on combination of cutout function 30 and statistical function 40.

Server device 300 has a malfunction data search algorithm 352; an example of assessment module 330, to search malfunction data in terms of feature value group 50 (feature value 1, feature value 2,...).

To be more specific, server device 300 selects one of the different types of feature values included in feature value group 50 and calculates the feature value of the selected type for each piece of data included in time-series data group 62. Then, server device 300 searches a piece(s) of time-series data assumed to be malfunction data from the distribution of the feature value calculated from the time-series data group.

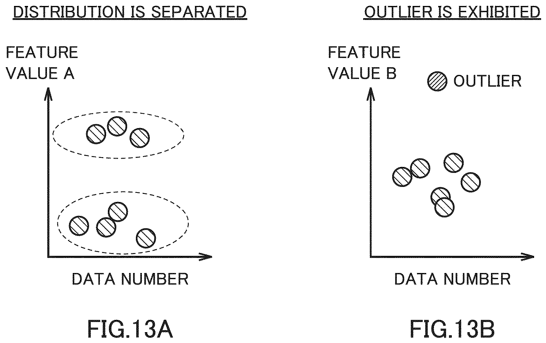

Figs. 13A and 13B are diagrams that illustrate a malfunction data searching process in information processing system 1 according to the embodiment.

In the example illustrated in Fig. 13A, the distribution of feature value A has two separate data sets, one of which may be determined as possible malfunction data. In case the distribution of a certain feature value includes separate data sets as illustrated in Fig. 13A, the extraction of malfunction data may be likely to succeed when this feature value is used.

In the example illustrated in Fig. 13B, the distribution of feature value B has no isolated data set unlike the earlier example, while exhibiting a value far off a data set (outlier), which may possibly be determined as malfunction data. In case the distribution of a certain feature value includes an outlier as illustrated in Fig. 13B, the extraction of malfunction data may be likely to succeed when this feature value is used.

Thus, malfunction data search algorithm 352 determines, using such a means as clustering, whether the distribution includes any isolated data set and also determines whether the distribution includes any data with a relatively large deviation from the center value (outlier). Then, malfunction data search algorithm 352 decides, as possible malfunction data, such an outlier and one of separate data sets.

Server device 300 repeatedly carries out the process described thus far for all of the different types of feature values included in feature value group 50.

As a reply to information processing apparatus 200, server device 300 sends the result of search for all of the different types of feature values included in feature value group 50. Information processing apparatus 200 presents, to a user, the search result received from server device 300. To be specific, information processing apparatus 200 presents, to a user, information 72 for labeling. Information processing apparatus 200 appends labels to pieces of data in time-series data group 62 in response to a user operation. The labeled time-series data group 62 is used as training data 60.

Thus, information processing system 1 calculates the distributions of all of different types of feature values included in feature value group 50 defined based on combination of cutout function 30 and statistical function 40. Thus, information processing system 1 searches malfunction data included in time-series data group 62.

Feature value group 50 including a plurality of different types of feature values may possibly involve an enormous volume of computations. To deal with such a heavy computational load, server device 300 (for example, cloud-based computing resource) may preferably be additionally used, instead of use of information processing apparatus 200 alone. Information processing apparatus 200, if equipped with an abundant computing resource, may be solely used to handle all of the computations.

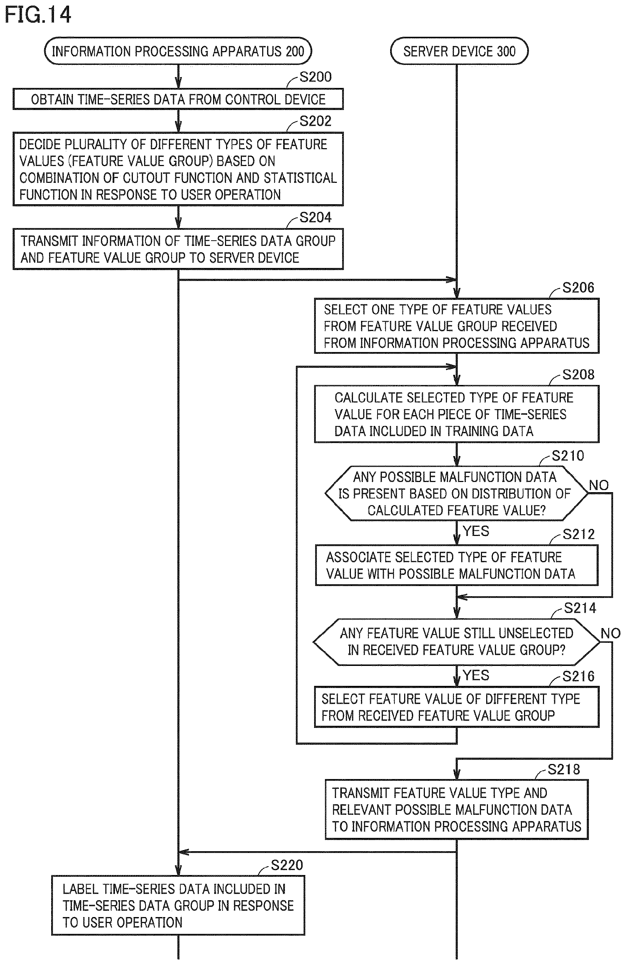

Fig. 14 is a flow chart that illustrates processing steps of the training data generating process in information processing system 1 according to the embodiment. With reference to Fig. 14, information processing apparatus 200 obtains time-series data group 62 from control device 100 (step S200). Thus, information processing apparatus 200 carries out a process to obtain time-series data from control device 100.

Information processing apparatus 200, in response to a user operation, decides a plurality of different types of feature values (feature value group 50) based on combination of cutout function 30 and statistical function 40 (step S202). Thus, information processing apparatus 200 carries out a process to decide a plurality of different types of feature values based on combination of cutout function 30 (first function) that defines a range used for feature value calculation in a target piece of time-series data and statistical function 40 (second function) that defines a statistic used as feature value.

Then, information processing apparatus 200 transmits information of feature value group 50 and time-series data group 62 to server device 300 (step S204). Specifically, information processing apparatus 200 requests the computing resource (typically, server device 300) to perform assessment of the time-series data for each of the plurality of different types of feature values. Server device 300; an exemplified computing resource, carries out a process to assess the time-series data for each of the plurality of different types of feature values.

To be more specific, server device 300 selects one of the different types of feature values included in feature value group 50 received from information processing apparatus 200 (step S206) and calculates the feature value of the selected type for each piece of time-series data included in training data 60 (step S208). Then, server device 300 determines whether the distribution of the calculated feature value includes possible malfunction data (step S210). When any possible malfunction data is found (YES in step S210), server device 300 associates the feature value of the selected type with this possible malfunction data (step S212). Server device 300 may associate the feature value of the selected type with the accuracy of separation calculated at the time of search of malfunction data.

Next, server device 300 determines whether any feature value remains unselected in the received feature value group 50 (step S214). In case any feature value in the received feature value group 50 is still unselected (YES in step S214), server device 300 selects the feature value of a different type in feature value group 50 received from information processing apparatus 200 (step S216) and repeats step S208 and steps that follow this step.

Thus, server device 300 decides a piece(s) of time-series data assumed to exhibit a property that differs from other pieces of time-series data for each of the plurality of different types of feature values based on the distribution of the target feature value calculated from the time-series data.

In case no feature value is left unselected in the received feature value group 50 (NO in step S214), server device 300 transmits the feature value types and the relevant pieces of possible malfunction data to information processing apparatus 200 (step S218).

Information processing apparatus 200 presents, to a user, information 72 for labeling based on the information received from server device 300 (step S220). Information processing apparatus 200 appends labels to pieces of time-series data in time-series data group 62 in response to a user operation (step S222). Information processing apparatus 200 generate training data 60 by thus appending labels to pieces of time-series data in response to a user operation.

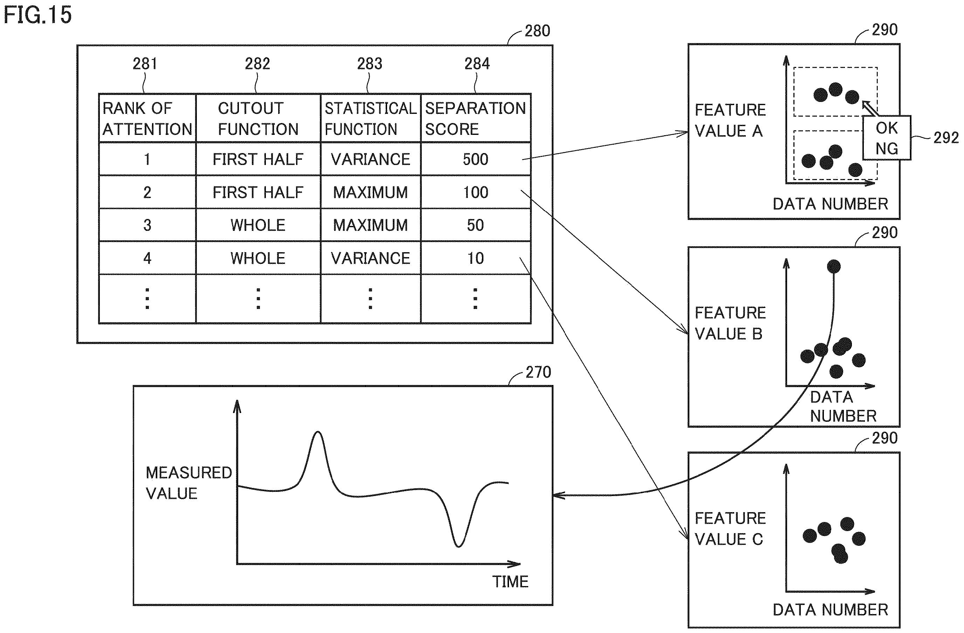

Fig. 15 is a schematic drawing that illustrates another example of the user interface screen provided by information processing apparatus 200 of information processing system 1 according to the embodiment. With reference to Fig. 15, information processing apparatus 200 provides a user interface screen 280 including information for labeling.

Information processing apparatus 200 presents user interface screen 280 including a piece(s) of time-series data assumed to exhibit a property that differs from other pieces of time-series data calculated (possible malfunction data) calculated by server device 300 (assessment module 330) for at least part of plurality of different types of feature values.

To be more specific, user interface screen 280 includes a ranking result obtained as per the calculated accuracies of separation. To be specific, user interface screen 280 includes an accuracy of separation calculation result for each of the different types of feature values. A user appends labels to pieces of data with reference to user interface screen 280.

To be more specific, user interface screen 280 includes a ranking of attention column 281, a cutout function column 282, a statistical function column 283, and a separation score column 284.

Ranking of attention column 281 shows a ranking order obtained as per the accuracies of separation (separation score) depending on possible malfunction data.

Cutout function column 282 shows the type of a selected cutout function. Statistical function column 283 shows the type of a selected statistical function. Separation score column 284 shows separation scores each obtained by quantifying the accuracy of separation calculated for a corresponding one of the different types of feature values.

Optionally, a feature value distribution graph 290 used for separation accuracy calculation may be displayed when one of the different types of feature values is selected on user interface screen 280.

A user, while consulting feature value distribution graph 290, may select a target feature value or a data set and appends the OK label or NG label to the selected one. Feature value distribution graph 290 displays a labeling diagram 292 in response to a user operation. A user may select a data set or an outlier included in the feature value distribution and operates labeling diagram 292 to append the OK label or NG label to the selected one.

Optionally, time-series data graph 270 may be displayed that indicates a piece(s) of time-series data for which a selected one of the feature values has been calculated when one of the feature values displayed on feature value distribution graph 290 is selected. The display of time-series data graph 270 may ensure that a user checks and knows malfunction data, if any.

Any labeled sample (time-series data) may be displayed in a different manner. Such a different manner of display may save the trouble of checking details of the same sample (time-series data) over and over again.

As a result of these processing steps described thus far, training data 60 (labeled time-series data group) may be prepared without having to rely on personal skills and experiences.

### <F. Advantages>

Any troubles detectable as malfunction may have variously different time waveforms (time-series data). To calculate the feature value used for malfunction detection from the time-series data, the embodiment described herein uses the feature value decided based on combination of the cutout function (first function) that defines a range used for feature value calculation in a target piece of time-series data and the statistical function (second function) that defines a statistic used as feature value.

There are, however, a considerable number of different types of feature values that can be decided based on combination of the cutout function and the statistical function. Thus, assessment of all of these feature values using manpower alone is, in fact, practically impossible. While the feature values are often decided and used depending on personal skills and experiences in the known art, the feature values thus decided may not always be correct or most suitable.

The information processing system according to the embodiment described herein, on the other hand, performs assessment of the time-series data for each of the plurality of different types of feature values using the computer resource, thus assisting the decision of an appropriate feature value(s).

All of the embodiments are disclosed herein by way of illustration and example only and should not be construed as limiting by any means the scope of the present invention. The scope of the present invention is solely defined by the appended claims and is intended to cover the claims, equivalents, and all of possible modifications made without departing the scope of the present invention.

## Claims

1. An information processing system (1) comprising:
an obtaining module (230) configured to obtain time-series data from a control device (100);
a decision module (232) configured to decide a plurality of different types of feature values (50) based on combination of a first function (30) that defines a range used for feature value calculation in a target piece of the time-series data and a second function (40) that defines a statistic used as feature value; and
an assessment module (330) configured to assess the time-series data for each of the plurality of different types of feature values.

2. The information processing system according to claim 1, wherein the assessment module (330, 350) is configured to calculate an accuracy of separation for each of the plurality of different types of feature values based on a label appended to the time-series data and a value of a corresponding type of the feature values calculated from the time-series data.

3. The information processing system according to claim 1 or 2, further comprising a first presentation module (236) configured to present a first user interface screen (250) including an accuracy of separation calculated by the assessment module for at least part of the plurality of different types of feature values.

4. The information processing system according to any of claims 1 to 3, further comprising an algorithm generation module (238) configured to generate a malfunction detection algorithm (70) including one or more feature values selected from the plurality of different types of feature values.

5. The information processing system according to claim 4, wherein the algorithm generation module is configured to transmit the malfunction detection algorithm to the control device.

6. The information processing system according to any of claims 1 to 5, wherein the assessment module (330, 352) is configured to decide a piece of the time-series data assumed to exhibit a property that differs from other pieces of the time-series data for each of the plurality of different types of feature values based on a distribution of a target one of the different types of feature values calculated from the time-series data.

7. The information processing system according to any of claims 1 to 6, further comprising a second presentation module (236) configured to present a second user interface screen (280, 290) including the piece of the time-series data assumed to exhibit a property that differs from other pieces of the time-series data calculated by the assessment module for at least part of the plurality of different types of feature values.

8. The information processing system according to any of claims 1 to 7, further comprising a training data generation module (234) configured to generate training data by appending a label to the time-series data in response to a user operation.

9. An information processing apparatus (200) comprising:
an obtaining module (230) configured to obtain time-series data from a control device (100);
a decision module (232) configured to decide a plurality of different types of feature values (50) based on combination of a first function (30) that defines a range used for feature value calculation in a target piece of the time-series data and a second function (40) that defines a statistic used as feature value; and
a transmission module (240) configured to request a computing resource (300) to perform assessment of the time-series data for each of the plurality of different types of feature values.

10. An information processing method implemented by a computer (200), the method comprising:
obtaining (S100; S200) time-series data from a control device (100);
deciding (S104; S202) a plurality of different types of feature values based on combination of a first function that defines a range used for feature value calculation in a target piece of the time-series data and a second function that defines a statistic used as feature value; and
assessing (S108-S118; S206-S216) the time-series data for each of the plurality of different types of feature values.

11. The information processing method according to claim 10, wherein the assessing the time-series data includes calculating (S 112) an accuracy of separation for each of the plurality of different types of feature values based on a label appended to the time-series data and a value of a corresponding type of the feature values calculated from the time-series data.

12. The information processing method according to claim 10 or 11, further comprising presenting (S122) a first user interface screen (250) including an accuracy of separation for at least part of the plurality of different types of feature values.

13. The information processing method according to any of claims 10 to 12, further comprising generating (S124) a malfunction detection algorithm (70) including one or more feature values selected from the plurality of different types of feature values.

14. The information processing method according to claim 13, further comprising transmitting (S126) the malfunction detection algorithm to the control device.

15. The information processing method according to any of claims 10 to 14, wherein the assessing the time-series data includes deciding a piece of the time-series data assumed to exhibit a property that differs from other pieces of the time-series data for each of the plurality of different types of feature values based on a distribution of a target one of the different types of feature values calculated from the time-series data.
